# EUROPEAN PATENT APPLICATION

(11) **EP 3 425 009 A1**
(43) Date of publication of application: **09.01.2019**
(21) Application number: 17179878.8
(22) Date of filing: 05.07.2017
(51) Int. Cl.: C09C 1/02, C08K 3/00, C01F 11/46, C09C 3/12

(54) **SURFACE MODIFIED BARIUM SULFATE PARTICLES AND THEIR USE**

(71) Applicant: Venator Germany GmbH, 47198 Duisburg (DE)
(72) Inventor: ROHE, Markus, 47445 Moers (DE)
(74) Representative: Nobbe, Matthias

(57) **Abstract**

The present invention refers to treated barium sulfate particles with improved dispersibility, color and intrinsic viscosity of the polymer (Polymer IV), processes for the preparation thereof and its use for preparing polymers for films.

## Description

The present invention refers to treated barium sulfate particles intended for use in a polymer with improved dispersibility, color and intrinsic viscosity of the polymer (Polymer Intrinsic Viscosity - Polymer IV), processes for the preparation thereof and its use for preparing polymers for films.

### State of the art

BaS0₄ is used as a void creator in white BOPET (Biaxially-oriented polyethylene terephthalate - a polyester film made from stretched polyethylene terephthalate (PET)) films. During the bi-axial extension, the void (air) is generated and leads to a white film. The film is mainly used for the last layer in LC-Displays.

DE 10005685 describes a BaS0₄ aftertreated with an organic additive and used amongst other in films and plastics. BaS0₄ is produced by the precipitation of BaCl₂ or Ba(OH)₂ with Na₂S0₄ or H₂S0₄.

Several additives are mentioned as aftertreatment compounds e.g. silanes and siloxanes to improve among others the dispersibility. There is no mentioning of any impact on the intrinsic viscosity of the polymer (Polymer IV) and on the color.

WO2012/025105 describes a functionalized BaS0₄ for using in (powder) coatings. The functional group of the used additive comprises epoxy, vinyl or amino groups. The coupling to the surface is done by an aftertreatment of silica or TiO₂ on the surface of the BaS0₄. Due to the formation of OH-groups of these metal oxides the additive can bond to the core-shell particle. The focus is here to improve abrasion or other physical chemical properties of the final coating. The functional group can react with the binder in the coating.

DE 102007040658 describes the synthesis of a composite of BaS0₄ and a polymer. In this application, the BaS0₄ is treated first with an inorganic aftertreatment and then with different additives (e.g. silanes, also epoxy-silanes) in aqueous solution. The particle size is smaller than 350 nm. The composite material can be used for plastics, fibers and films.

For the production of white BOPET films, barium sulfate is used as a void builder. In the film process, the color and dispersibility of the BaSO₄ has to be on an optimum level. The dispersibility has to be high and the color, especially the yellowness, has to be very low.

Furthermore the whole process is limited by the intrinsic viscosity of the polymer (IV) of the film. If the viscosity is too low the film producers suffer from many film breakages and have to restart the whole process. When BaSO₄ is added to the polymer normally there is a drop of the intrinsic viscosity of the polymer which leads to less production through-put.

One standard product for this application is a BaSO₄ with a polyacrylate aftertreatment which is a standard BaSO₄ for films. Compared to the method described here, said standard BaSO₄ has a relative high yellowness and an undesired impact on the intrinsic viscosity of the polymer (Polymer IV). The dispersibility of said standard BaSO₄ is also relative high.

As discussed above, there is some literature and there are the above patent applications which describe BaSO₄ for films and organic aftertreated BaSO₄. The above patents about BaSO₄ try to solve related problems, but the problem of the present was to find a solution for all these technical problem in producing a BaSO₄ with high dispersibility, low yellowness, high whiteness and enhanced influence on intrinsic viscosity of the polymer (Polymer IV). Thus, it is not obvious for the skilled man confronted with the technical problem to end up in the final solution described here. Moreover the solution described here is very special and can be used for a small niche such as film applications. Starting from the above patent applications, the inventive solution to use an epoxy-siloxane on the surface of BaSO₄ is not obvious.

Compared to the state of the art, the present invention has several benefits:
- solving all issue (dispersibility, color, intrinsic viscosity of the polymer (Polymer IV)) in ONE additive,
- no additional additives or stabilizer are needed
- at least comparable properties as for common chain extenders are obtained in the plastic but without their negative side effects such as toxicity and mobility in and out of the plastic,
- the properties of the plastic are achieved in a simple way by adding the treated BaSO₄ particles to the plastic as one component only, which allows an easier handling and dosing,
- no additional inorganic aftertreatment needed,
- the additive leads to a low yellowness,
- the epoxy group can directly react with the PET and contributes to increasing the intrinsic viscosity of the polymer (Polymer IV) by containing epoxy-groups,
- less film breakages during film process at customer's site,
- the siloxane backbone leads to an excellent dispersibility,
- stable for an extended period of time,
- easy to produce and to handle, and not toxic,
- additive can be used as a liquid or, if desired, in a diluted solution, and is easy to be sprayed on the dry powder or filtercake of BaSO₄,
- no further extensive drying steps, volatilisation or removal of water (filtration) needed,
- low amount of additive needed (0.5 %),
- lower production costs,
- highly reactive in masterbatch and in BOPET film application.

The present invention solves the described technical problem by using one additive which can by mixed or sprayed on the surface of the BaSO₄. The additive basically consists of a siloxane backbone and has at least one epoxy-functional group. The epoxy-group can react with a breakage side of the PET chain. Such film breakage can occur by release of small amount of water (< 25 ppm) or by thermal decomposition of the polymer chain during the masterbatch process.

Thus, the siloxane backbone has a positive impact on the dispersibility and color of the BaSO₄.

The present invention is therefore directed to barium sulfate particles which are treated and the surface of which is at least partially coated with at least one epoxy-functional polysiloxane of the general Formula I, 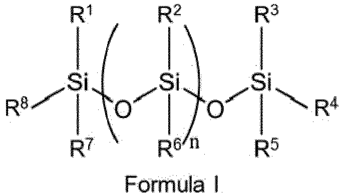 wherein:
- n is an integer from 10 to 100, preferably 20 to 60;
- R¹ to R⁷ may be the same or different and are selected from the group consisting of:
   CₘH₂ₘ₊₁, wherein m is ≤10, preferably <6, more preferably <4, and even more preferably m = 1, 2 or 3, and fluorinated derivatives thereof wherein at least one hydrogen atom is replaced by fluorine, such as CH₂CH₂CF₃, (EO)ₓ, (PO)_{y} and copolymers thereof, wherein EO represents an oxyethylene unit, PO represents an oxypropylene unit and x and y may be the same or different and x + y is in the range of 1 to 50, and
- -R⁸ is an alkyl group having 1 to 20 carbon atoms, optionally having O in the chain, or an oxyalkylene group having 1 to 3 carbon atoms and polymers thereof being selected from (EO)ₓ, (PO)_{y} and copolymers thereof, wherein EO represents an oxyethylene unit, PO represents an oxypropylene unit and x and y may be the same or different and x + y is in the range of 1 to 50, said alkyl group or oxyalkylene group having at least one epoxy group, such as an epoxyalkyl-functional substituent with up to six carbon atoms.

As an example of the compounds of the general Formula I is the commercially available Tegomer® E-Si 2330 produced by the company Evonik which is a glycidyl-oxypropyl-terminated polydimethylsiloxane (PDMS), a polymeric organosilicon compound, i.e. a PDMS with approximately 30 SiO-units and having a 3-(oxiranylmethoxy)propyl-terminal group.

In another embodiment, a polysiloxane of the general Formula I or mixtures thereof can be used for treating the barium sulfate particles, wherein R⁴ and R⁸ are the same or different and each of R⁴ and R⁸ bears an epoxy group.

In more detail, a polysiloxane of the general Formula I or mixtures thereof can be used for treating the barium sulfate particles,
wherein in such Formula I
- n is an integer from 10 to 100, preferably 20 to 60;
- R¹ to R³ and R⁵ to R⁷ may be the same or different and are selected from the group consisting of:
   CₘH₂ₘ₊₁, wherein m is ≤10, preferably <6, more preferably <4, and even more preferably m = 1, 2 or 3, and fluorinated derivatives thereof wherein at least one hydrogen atom is replaced by fluorine, such as CH₂CH₂CF₃, (EO)ₓ, (PO)_{y} and copolymers thereof, wherein EO represents an oxyethylene unit, PO represents an oxypropylene unit and x and y may be the same or different and x + y is in the range of 1 to 50, and
- R⁴ and R⁸ are the same or different and each represents an alkyl group having 1 to 20 carbon atoms, optionally having O in the chain, or an oxyalkylene group having 1 to 3 carbon atoms and polymers thereof being selected from (EO)ₓ, (PO)_{y} and copolymers thereof, wherein EO represents an oxyethylene unit, PO represents an oxypropylene unit and x and y may be the same or different and x + y is in the range of 1 to 50, said alkyl group or oxyalkylene group having at least one epoxy group, such as an epoxyalkyl-functional substituent with up to six carbon atoms, such as a 3-(oxiranylmethoxy)-C₁-C₆-alkyl group.

Preferably, the barium sulfate to be treated coated with the at least one polysiloxane of the general Formula I has a residual moisture content of less than 1.0 wt-%, preferably less than 0.5 wt-%, more preferably less than 0.4 wt-%, determined by drying at 160°C to weight constancy.

The barium sulfate according to the present invention provides a surface, which is at least partially covered by the at least one polysiloxane, preferably accompanied by a low residual moisture content. The treatment leads to an improved stability of plastic films containing these coated barium sulfate pigments. According to the inventor, the low residual moisture content and catching any active sites are responsible for reduced polymer degradation, which is measured as yellow color and polymer IV of the plastics due to thermal stress during the extrusion/molding process or during the lifetime of the plastic article containing the barium sulfate. Other impacts on the properties of the plastics, which are impaired by polymer degradation like mechanical strength, will also be reduced.

The barium sulfate can be treated/coated either with one kind of polysiloxanes of the general Formula I or with a mixture of different kinds of polysiloxanes of the general Formula I as shown above.

The barium sulfate according to the present invention can be any barium sulfate.

The barium sulfate according to the present invention may be inorganically or organically surface-modified with further compounds before treating with the at least one polysiloxane of the general Formula I.

Ultrafine barium sulfate particles without surface modification can be used according to the invention. Alternatively, in a particular embodiment, the barium sulfate particles can have an inorganic and/or organic surface modification.

The inorganic surface modification of the barium sulfate typically consists of at least one inorganic compound selected from aluminium, antimony, barium, calcium, cerium, chlorine, cobalt, iron, phosphorus, carbon, manganese, oxygen, sulfur, silicon, nitrogen, strontium, vanadium, zinc, tin and/or zirconium compounds or salts. Sodium silicate, sodium aluminate and aluminium sulfate are cited by way of example.

The inorganic surface treatment of the ultrafine BaSO₄ may take place in an aqueous slurry. The reaction temperature should preferably not exceed 50° C. The pH of the suspension is set to pH values in the range above 9, using NaOH for example. The post-treatment chemicals (inorganic compounds), preferably watersoluble inorganic compounds such as, for example, titanium, aluminium, antimony, barium, calcium, cerium, chlorine, cobalt, iron, phosphorus, carbon, manganese, oxygen, sulfur, silicon, nitrogen, strontium, vanadium, zinc, tin and/or zirconium compounds or salts, are then added whilst stirring vigorously. The pH and the amounts of post-treatment chemicals are chosen according to the invention so that the latter are completely dissolved in water. The suspension is stirred intensively so that the post-treatment chemicals are homogeneously distributed in the suspension, preferably for at least 5 minutes. In the next step the pH of the suspension is lowered. It has proved advantageous to lower the pH slowly whilst stirring vigorously. The pH is particularly advantageously lowered to values from 5 to 8 within 10 to 90 minutes. This is followed according to the invention by a maturing period, preferably a maturing period of approximately one hour. The temperatures should preferably not exceed 50° C. The aqueous suspension is then washed and dried. Possible methods for drying ultrafine, surface-modified BaSO₄ include spray-drying, freeze-drying and/or mill-drying, for example. Depending on the drying method, a subsequent milling of the dried powder may be necessary. Milling can be performed by methods known per se.

According to the invention, the organically surface-modified barium sulfate particles optionally have one or more functional groups, for example one or more hydroxyl, amino, carboxyl, epoxy, vinyl, methacrylate and/or isocyanate groups, thiols, alkyl thiocarboxylates, di- and/or polysulfide groups.

According to the invention, the organically surface-modified barium sulfate particles optionally have one or more functional groups, for example one or more hydroxyl, amino, carboxyl, epoxy, vinyl, methacrylate and/or isocyanate groups, thiols, alkyl thiocarboxylates, di- and/or polysulfide groups.

The surface modifiers can be chemically and/or physically bound to the particle surface. The chemical bond can be covalent or ionic. Dipole-dipole or van der Waals bonds are possible as physical bonds. The surface modifiers are preferably bound by means of covalent bonds or physical dipole-dipole bonds.

According to the invention the surface-modified barium sulfate particles have the ability to form a partial or complete chemical and/or physical bond with the polymer matrix via the surface modifiers and the siloxane of the general formula I. Covalent and ionic bonds are suitable as chemical bond types. Dipole-dipole and van der Waals bonds are suitable as physical bond types.

According to the present invention, the barium sulfate can also be pretreated with an alcohol such as TMP (trimethylolpropan) or with a reactive silane having reactive Si-H moieties or other reactive polysiloxanes having Si-OR moieties in order to additionally modify the surface of the pigment particles and to increase the dispersibility of the particles.

In one exemplary embodiment, the barium sulfate is a pigment being treated with hydrated inorganic precursors of silicon dioxide and/or aluminium oxide, optionally dried to weight constancy and then treated with at least one polysiloxane of the general Formula I.

Accordingly, the present invention also provides a method for producing a coated barium sulfate according to the present invention comprising the step of treating barium sulfate particles with at least one polysiloxane of the general Formula I or mixtures thereof,

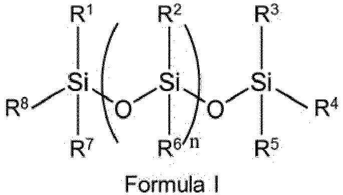

Wherein:
- n is an integer from 10 to 100, preferably 20 to 60;
- R¹ to R⁷ may be the same or different and are selected from the group consisting of:
   CₘH₂ₘ₊₁, wherein m is ≤10, preferably <6, more preferably <4, and even more preferably m = 1, 2 or 3, and fluorinated derivatives thereof wherein at least one hydrogen atom is replaced by fluorine, such as CH₂CH₂CF₃,
   (EO)ₓ, (PO)_{y} and copolymers thereof, wherein EO represents an oxyethylene unit, PO represents an oxypropylene unit and x and y may be the same or different and x + y is in the range of 1 to 50, and
- -R⁸ is an alkyl group having 1 to 20 carbon atoms, optionally having O in the chain, or an oxyalkylene group having 1 to 3 carbon atoms and polymers thereof being selected from (EO)ₓ, (PO)_{y} and copolymers thereof, wherein EO represents an oxyethylene unit, PO represents an oxypropylene unit and x and y may be the same or different and x + y is in the range of 1 to 50, said alkyl group or oxyalkylene group having at least one epoxy group, such as an epoxyalkyl-functional substituent with up to six carbon atoms, or
with a treating the barium sulfate particles with at least one polysiloxane of the general Formula I, wherein R⁴ and R⁸ are the same or different and each of R⁴ and R⁸ bears an epoxy group.

The treating step is preferably carried out at ambient temperature but might also be carried out at an elevated temperature in the range of up to 100°C. Due to the elevated temperature, any additional water is driven out of the barium sulfate and the surface of the barium sulfate with its active sites is covered by the at least one polysiloxane.

The treating step can also be carried out as a two-step or multi-step process in which the at least one polysiloxane of the general Formula I is added to the pigment in several steps which stages might be interrupted each by a milling or kneading step. Conventional dispersing methods, in particular using melt extruders, high-speed mixers, triple roll mills, ball mills, bead mills, submills, ultrasound or kneaders, may also be used to disperse the barium sulfate in the masterbatch or in an organic substance. The use of submills or bead mills with bead diameters of d<1.5 mm is particularly advantageous.

In one embodiment, the barium sulfate is used in a pre-dried form having a residual moisture content of less than 1 wt-%, preferably less than 0.5 wt-%, more preferably less than 0.4 wt-%, determined by drying at 160°C to weight constancy. In case of a pre-dried barium sulfate, an elevated temperature during the treating of the barium sulfate with at least one polysiloxane of the general Formula I is not mandatory. Thus, according to the present invention, it is possible to treat the barium sulfate thermally until a residual moisture content of less than 1.0 wt-%, preferably less than 0.5 wt-%, more preferably less than 0.4 wt-%, determined by drying at 160°C to weight constancy, is achieved, followed by treating the obtained barium sulfate with the at least one polysiloxane of the general Formula I.

Consequently, in case the step of treating an barium sulfate with at least one polysiloxane of the general Formula I is carried out at elevated temperatures, it is possible to use an barium sulfate as starting material that has a higher moisture content. The elevated temperatures leads to evaporation of the water, which is directly replaced by the at least one polysiloxane.

According to the invention, the step of treating the barium sulfate with said at least one polysiloxane of the general Formula I is carried out for less than 12 h, preferably less than 6 h, more preferably less than 4h, most preferably between 0.25 to 2 h. The treating can comprise spraying, milling and/or kneading of the barium sulfate particles being brought in contact with the at least one siloxane of the general formula I.

The so obtained barium sulfate particles are suitable for use as an additive for a thermoplastic polymer, preferably selected from polyacrylates, polyamides, polyalkylenes, polyethers, polyesters, PET. For this purpose, the treated barium sulfate particles are added to the polymer in solid, semi-solid or liquid/molten form, optionally mixed and subjected to a plastics forming process, preferably an injection molding process, a compression molding process, a pressing process or an extrusion process whereby a masterbatch or a moulded article is obtained.

The polymer according to the invention may contain a polymer matrix having 0.1 to 70 wt. % of barium sulfate particles, with average particles sizes from 40 nm to 1,5 µm. According to the invention the barium sulfate particles can be both surface-modified and non-surface-modified.

The polymer according to the invention can also contain components known per se to the person skilled in the art, for example mineral fillers, glass fibers, stabilisers, process additives (also known as protective systems, for example dispersing aids, release agents, antioxidants, anti-ozonants, etc.), pigments, flame retardants (e.g. aluminium hydroxide, antimony trioxide, magnesium hydroxide, etc.), vulcanisation accelerators, vulcanisation retarders, zinc oxide, stearic acid, sulfur, peroxide and/or plasticisers.

Usually, the treated particles are added to the polymer in a weight ratio of 0,1wt.-% to 70 wt.-%, preferably 10 wt.-% to 60 wt.-%, related to the total weight of the final polymer product. The plastics forming process is usually carried out at a temperature in the range of 200°C to 450°C, preferably in the range of 250°C to 370°C. Using the inventive process, moulded articles with improved properties such as improved dispersibility, color and intrinsic viscosity are obtainable, preferably in the form of a PET-film having reduced film breakages.

Conventional dispersing methods, in particular using melt extruders, high-speed mixers, triple roll mills, ball mills, bead mills, submills, ultrasound or kneaders, may also be used to disperse the barium sulfate in the masterbatch or in the organic substance. The use of submills or bead mills with bead diameters of d<1.5 mm is particularly advantageous.

### Experimental Part

The determination of the Polymer Intrinsic Viscosity (IV) is a viscometric method for measuring molecular size. IV is based on the flow time of a polymer solution through a narrow capillary relative to the flow time of the pure solvent through the capillary. The units of IV are typically reported in deciliters per gram (dL/g).

Polymer IV is simple and inexpensive to obtain and reproducible between different laboratories

The intrinsic viscosity of the material is found by extrapolating to zero concentration of relative viscosity to concentration which is measured in deciliters per gram (dℓ/g). Intrinsic viscosity is dependent upon the length of its polymer chains but has no units due to being extrapolated to zero concentration. The longer the polymer chains the more entanglements between chains and therefore the higher the viscosity. The average chain length of a particular batch of resin can be controlled during polycondensation.

The particle size of the inventive barium sulfate was determined by a Mastersizer MS 2000 via a laser diffraction particle size analysis.

### Measurement of BaSO4:

1 g of powder is dispersed with 50 ml Calgon solution, 1 g/l, for 10 min with stirring in the ultrasonic bath. The suspension is introduced into the measuring room filled with water up to a suitable optical concentration. The measurement is carried out after another 10s ultrasonic bath. The evaluation is done according to Fraunhofer. The particle sizes are specified for x₁₀, x₅₀ and x₉₀.

When mixing barium sulfate particles treated with the at least one polysiloxane of the general Formula I and a PET polymer for producing a PET film, the following observations are made. Compared to the standard product for the film market the inventive product "New grade" brings the following improvements:

| | Standard BaSO₄ | New grade |
|---|---|---|
| Dispersibibility DF [bar] | 10-20 | 5-20 |
| Polymer IV [dl/g] | 0,46-0,48 | 0,5-0,55 |
| Yellowness b* | 14-18 | 8-11 |

The intrinsic viscosity of the polymer (Polymer IV) seems to be only a small difference in measured value, but such a difference is enormous and leads to a high improvement in the film production process. Furthermore, the yellowness of the polymer with the new grade is much lower.

As an alternative, adding a chain extender to the whole film masterbatch as known in the state of art leads to increasing production cost and also imparts often a high toxicity to the obtained product due to the chain extender itself. Also a further production step where the dosage has to be checked is needed.

The yellowness is important for the film production. The films are used as reflector films in LCD for TV's. If the yellowness is too high the reflectivity is too low. With standard BaSO4, a reflectivity of up to 98 % can be reached, with the new grade 99 % or even higher because the L* is also higher compared to standard BaSO₄ (see below in the Tables). In view of the improved color values, the influences on any color changes and distortion are reduced.

A further benefit is that the additives do not lead to any smells during the production. Often free sulphide ions are responsible for a smell. The siloxane coating can catch these sulphide ions. Such free sulfide ions are usually residues of the starting material from the BaSO₄ production. BaSO₄ is typically precipitated by BaS. A very small amount of sulfide ions can remain on the surface of the BaSO₄. By adding the at least one polysiloxane of the general Formula I, the inventive particles nor any product manufactured therewith do suffer from any disturbing smells.

Advantageously, the inventive new grade can be produced on the same production line as the standard BaSO₄ without any production step changes.

### Examples for production:

BaS04 in the form of dried powder was sprayed with 0.5 - 1,0 wt.-% Epoxysiloxane (Evonik E-SI 2330) at room temperature. The mixed product is steam jet milled and packed.

A masterbatch of PET (Typ RT6020 from Invista Resin & Fibers GmbH) with the product is prepared in the application laboratory. The dispersibility is verified by the internal DF test (pressure filter test) and the resulting PET Masterbatch chips are analyzed by the color index (Lab color- test) and the viscosity test to determine the intrinsic viscosity of the polymer (Polymer IV).

### Pressure Filter Test

Controlling the dispersion of the masterbatch chips as prepared is made in line with DIN 13900-5 with a pressure filter test. The material is pressed at a temperature of approximately 280 °C under constant pressure (50 bar) by means of a twin-screw extruder at 40 rpm through a 17 µm filter on a supporting fabric. During the 50 min control, the pressure increase due to non-passing material is measured. In case of an insufficient dispersion, more agglomerates remain on the filter, thus leading to a pressure increase. In case of an ideal dispersion, the pressure increase may not be above 20 bar per 5 kg master batch (MB) over the whole test.

### Color Measurements

The color of an object may be evaluated by means of the Lab color space system. The *Lab* color space describes mathematically all perceivable colors in the three dimensions L for lightness and a and b for the color opponents green-red and blue-yellow. The measurements are carried out in line with EN ISO 11664-4 "Colorimetry -- Part 4: CIE 1976 L*a*b* Colour space", formerly *DIN 6174.* As a light source, normed light D65 is used and the masterbatch chips should have a L*-value of more than 90, an a*-value of between -1,0 and -0,5 and a b*-value of significantly below 15.

The results are given in the following Table 1:

| Additive | DF [bar]/ 5kg MB | IV [dL/g] | L* | a* | b* |
|---|---|---|---|---|---|
| Standard BaSO₄ | 7,1 | 0,46-0,48 | 87,5 | 0,19 | 14,2-18 |
| Epoxy-siloxane | 13,2 | 0,5 | 88,8 | -0,71 | 10,4 |
| E-Si 2230 (lab scale) | 20,4 | 0,52 | 89,3 | -1,18 | 8,86 |
| Epoxy-siloxane E-SI 2330 plant trial material | 5,2 | 0,55 | 88,1 | -0,72 | 9,7 |

Further Examples have been carried out. For said Examples and Comparative Examples, a polymer has been mixed in differing amounts with barium sulfate particles according to the present invention with 0,5 wt.-% siloxane with the general Formula I and barium sulfate particles according to the prior art, in this case standard BaSO₄ in different amounts. As it can be taken from the following Tables 2 and 3, the polymers containing the inventive barium sulfate particles show superior overall properties with respect to color values, dispersibility and intrinsic viscosity of the polymer, in particular after a long time storage. One sample of the inventive material was batched into PET after 4, 6 and 12 months and the color data, the pressure filter test data (DF) and the Polymer IV were checked.

**Table 2 - Properties of the inventive BaSO₄**

| Storage stability | Plant trial - Inventive Sample | | | |
|---|---|---|---|---|
| | Barium sulfate with 0,5 wt-% Tegomer E-SI 2330 | | | |
| Yellowness [%] of PET chips | 23,2 | 21,5 | 20,6 | 18,2 |
| L* of PET chips | 87,9 | 87,5 | 87,7 | 86,7 |
| a* of PET chips | -0,08 | -0,49 | -0,36 | -0,68 |
| b* of PET chips | 11,94 | 11,25 | 10,73 | 9,47 |
| DF [bar] dispersibility / 5kg MB | 2,7 | 6,7 | 4,7 | 8,2 |
| Polymer IV [dl/g] | 0,54 | | 0,55 | 0,52 |
| | | | | |
| Storage time in months | 0 | 4 | 6 | 12 |

**Table 3 - Comparison of the inventive BaSO₄ and standard BaSO₄**

| | Example | Comparative Example |
|---|---|---|
| Properties | Barium sulfate with 0,5 wt-% Tegomer E-SI 2330 | Standard Barium sulfate with 0,5 wt-% Polyacrylate |
| Yellowness [%] of PET chips | 23,2 | 29,9 |
| L* of PET chips | 87,9 | 87,3 |
| a* of PET chips | -0,08 | -0,06 |
| b* of PET chips | 11,94 | 15,8 |
| DF [bar] dispersibility | 2,7 | 149,4 |
| Polymer IV [dl/g] | 0,54 | 0,48 |

## Claims

1. Barium sulfate particles which are treated and at least partially covered with at least one polysiloxane of the general Formula I, 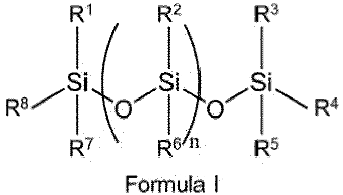 Wherein:
- n is an integer from 10 to 100, preferably 20 to 60;
- R¹ to R⁷ may be the same or different and are selected from the group consisting of:
CₘH₂ₘ₊₁, wherein m is ≤10, preferably <6, more preferably <4, and even more preferably m = 1, 2 or 3, and fluorinated derivatives thereof wherein at least one hydrogen atom is replaced by fluorine, such as CH₂CH₂CF₃,
(EO)ₓ, (PO)_{y} and copolymers thereof, wherein EO represents an oxyethylene unit, PO represents an oxypropylene unit and x and y may be the same or different and x + y is in the range of 1 to 50, and
- R⁸ is an alkyl group having 1 to 20 carbon atoms, optionally having O in the chain, or an oxyalkylene group having 1 to 3 carbon atoms and polymers thereof being selected from (EO)ₓ, (PO)_{y} and copolymers thereof, wherein EO represents an oxyethylene unit, PO represents an oxypropylene unit and x and y may be the same or different and x + y is in the range of 1 to 50, said alkyl group or oxyalkylene group having at least one epoxy group.

2. Barium sulfate particles according to claim 1, wherein, in the at least one polysiloxane of the general Formula I,
- n is an integer from 10 to 100, preferably 20 to 60;
- R¹ to R³ and R⁵ to R⁷ may be the same or different and are selected from the group consisting of:
CₘH₂ₘ₊₁, wherein m is ≤10, preferably <6, more preferably <4, and even more preferably m = 1, 2 or 3, and fluorinated derivatives thereof wherein at least one hydrogen atom is replaced by fluorine, such as CH₂CH₂CF₃,
(EO)ₓ, (PO)_{y} and copolymers thereof, wherein EO represents an oxyethylene unit, PO represents an oxypropylene unit and x and y may be the same or different and x + y is in the range of 1 to 50, and
- R⁴ and R⁸ are the same or different and each represents an alkyl group having 1 to 20 carbon atoms, optionally having O in the chain, or an oxyalkylene group having 1 to 3 carbon atoms and polymers thereof being selected from (EO)ₓ, (PO)_{y} and copolymers thereof, wherein EO represents an oxyethylene unit, PO represents an oxypropylene unit and x and y may be the same or different and x + y is in the range of 1 to 50, said alkyl group or oxyalkylene group having at least one epoxy group.

3. Barium sulfate particles according to claim 1 or 2, wherein R⁴ and R⁸ are the same or different and each represents an alkyl group having 1 to 20 carbon atoms, optionally having O in the chain, said alkyl group having at least one epoxy-alkyl- or oxyalkylene-group with two up to six carbon atoms.

4. Barium sulfate particles according to any of claims 1, 2 or 3, wherein the at least one polysiloxane is polydi-C₁-C₆-alkylsiloxane having at least one terminal glycidyloxy-C₂-C₆-alkyl group.

5. Barium sulfate particles according to anyone of claims 1 to 4, wherein the at least one polysiloxane is present in an amount of 0.01 and 5 wt-%, preferably between 0,1 and 2 wt-%, more preferably between 0,1 and 1 wt-% of the barium sulfate particles, calculated on the total weight of the coated pigment after drying at 160°C to weight constancy.

6. Barium sulfate particles according to anyone of claims 1 to 5 wherein the barium sulfate is inorganically or organically pretreated.

7. Method for producing a coated barium sulfate particles according to any of claims 1 to 6 comprising the step of treating barium sulfate particles with at least one polysiloxane of the general Formula I, 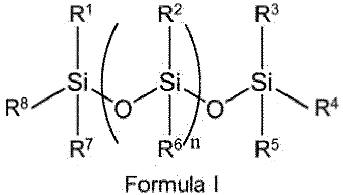 wherein n, and R¹ to R⁸ have the meaning as defined in claims 1 to 6, optionally in a solvent, selected from the group comprising aliphatic C₁ to C₆ alcohols and ethers, preferably at ambient temperature up to 100°C.

8. Method according to claim 7, wherein the step of treating the barium sulfate particles with said at least one polysiloxane of the general Formula I is carried out for less than 12 h, preferably less than 6 h, more preferably less than 4h, most preferably between 0.25 to 2 h.

9. Method according to anyone of claims 8 or 9, wherein treating comprises spraying, milling and/or kneading.

10. Barium sulfate particles treated and at least partially coated with at least one polysiloxane of the general Formula I, obtainable by a method as claimed in any of claims 7 to 9.

11. Polymer comprising barium sulfate particles obtainable according to the method any of claims 1 to 6 or according to claim 10.

12. Polymer according to claim 11, wherein the polymer comprises a thermoplastic, selected from polyacrylates, polyamides, polyalkylenes, polyethers, polyesters, PET, in particular polyamides and PET..

13. Method for producing a polymer as claimed in claims 11 or 12 comprising adding barium sulfate particles according to one of claims 1 to 6 or 10 to a polymer, mixing the obtained polymer-pigment combination and subjecting the obtained mixture to a plastics forming process, preferably an injection molding process, a compression molding process, a pressing process or an extrusion process whereby a masterbatch or a moulded article is obtained.

14. Method according to claim 12, wherein the method is carried out at a temperature in the range of 200°C to 450°C, preferably in the range of 250°C to 370°C.

15. Moulded article, obtainable by the method of any of claims 13 or 14, preferably in the form of a PET-film, in particular a BOPET film.
